# EUROPEAN PATENT SPECIFICATION

(11) **EP 4 113 708 B1**
(45) Date of publication and mention of the grant of the patent: **16.07.2025**
(21) Application number: 22181075.7
(22) Date of filing: 24.06.2022
(51) Int. Cl.: H01M 50/105, H01M 50/186, H01M 50/211, H01M 50/233, H01M 50/249, H01M 50/251, H01M 50/291

(54) **BATTERY PACK AND ELECTRICAL DEVICE**
BATTERIEPACK UND ELEKTRISCHE VORRICHTUNG
BLOC-BATTERIE ET DISPOSITIF ÉLECTRIQUE

(30) Priority: 25.06.2021 CN 202110710787
(43) Date of publication of application: 04.01.2023
(73) Proprietor: DONGGUAN POWERAMP TECHNOLOGY LIMITED, Dongguan City, Guangdong Province 523000 (CN)
(72) Inventor: HUANG, Liliang, Dongguan City, Guangdong Province, 523000 (CN); GONG, Tianmeng, Dongguan City, Guangdong Province, 523000 (CN); WANG, Pengfei, Dongguan City, Guangdong Province, 523000 (CN)
(74) Representative: Icosa

(56) References cited:
- US-A1- 2014 045 027
- US-A1- 2018 331 336
- US-A1- 2020 176 727

## Description

### TECHNICAL FIELD

The present application relates to the technical field of batteries, in particular to a battery pack and an electrical device.

### BACKGROUND

In the battery pack, multiple cells are close to each other, and side seals of the cells are easily deformed, which can easily cause the side seals of adjacent cells to lap. Once the side seals of adjacent cells are connected, an electronic circulation loop is formed between the aluminum-plastic film and the negative electrode, and the aluminum-plastic film undergoes oxidation reaction and forms an alloy together with ions (such as lithium ions) in the electrolyte, which leads to electrochemical corrosion of the cells and affects the safety performance of the cells and the battery pack. US 2018/0331336 discloses a battery module including a plurality of pouch-type secondary batteries, each including an electrode assembly, an electrolyte, a pouch exterior, a receiving portion configurated to receive the electrode assembly, and a sealing portion. This battery module has a simple structure, facilitates reduction in weight and size and saves manufacturing costs while securing an efficient cooling capacity. US 2020/0176727 discloses a unit cell including a cell body, an electrode tab and a sealing member. US 2014/0045027 discloses a battery pack including a plurality of unit batteries stacked and bonded together with a two-side adhesive tape.

### SUMMARY

In view of this, embodiments of the present application provide a battery pack and an electrical device for improving the problem of electrochemical corrosion caused by the connection of side seals of adjacent cells. The invention is defined by the subject matter of claim 1.

In the first aspect, embodiments of the present application provide a battery pack including a plurality of cells and a first structural member. The plurality of cells are stacked in a first direction, and the cells include an electrode assembly, a cell case, and a tab. The tab is connected to the electrode assembly and is extends out from the cell case. The cell case includes an accommodation portion for accommodating the electrode assembly and sealing parts extending outward from a periphery of the accommodation portion. The sealing parts include a first sealing part, a second sealing part and a third sealing part. The tab extends out of the cell case from the first sealing parts. The second sealing part is arranged on either of opposite sides of the accommodation portion in a second direction. The third sealing part extends from the second sealing part and connects the first sealing part and the second sealing part. A plurality of cells include a first cell and a second cell adjacent to each other. The third sealing part of the first cell is disposed oriented towards the third sealing part of the second cell, and the third sealing part of the second cell is disposed oriented toward the third sealing part of the first cell. The first structural member is made of an insulating material. The first structural member is disposed between the third sealing part of the first cell and the third sealing part of the adjacent second cell in the first direction.

The first structural member separates the aluminum-plastic film of the first cell and the aluminum-plastic film of the adjacent second cell, thereby limiting the electronic circulation loop between the aluminum-plastic film of one of the first and second cells and the negative electrode of the other, improving electrochemical corrosion, and being beneficial to improving the safety performance of the cells and the battery pack.

The battery pack also includes a housing for accommodating a plurality of cells, the housing includes a first wall, a second wall and a plurality of side walls, the first wall and the second wall are disposed opposite to each other in a third direction, the first structural member is disposed on the first wall, and the first structural member extends into the space between the third sealing part of the first cell and the third sealing part of the adjacent second cell in the second direction.

The first structural member includes a first part disposed between the third sealing part of the first cell and the third sealing part of the adjacent second cell in the first direction, and a second part disposed between the first sealing part of the first cell and the first sealing part of the adjacent second cell. Optionally, the first part and the second part as a whole are insulating members of a plate-like structure having a smaller thickness, which is beneficial for the first structural member to enter a position between the first cell and the adjacent second cell in a scenario where the first wall and the side walls are assembled.

Optionally, in the first direction, an orthographic projection of the third sealing part is located in an orthographic projection of the first part, which is beneficial for the first part to completely isolate the third sealing part of the first cell from the third sealing part of the adjacent second cell, thereby improving the isolation effect.

In the third direction, a length of a portion that is of the first part and disposed between the third sealing parts is H1, and a length of a portion that is of the second part and disposed between the first sealing parts is H2, where H1 is less than H2. In a scenario where the first wall is assembled with the side walls in the third direction, the second part is first extended to a position between the first sealing part of the first cell and the first sealing part of the adjacent second cell to implement preliminary positioning, which is beneficial for the first part to enter a position between the third sealing part of the first cell and the third sealing part of the adjacent second cell.

Optionally, in the third direction, a length of the third sealing part is H0, satisfying: H1 ≥ 5% of H0, which can reduce the contact between adjacent third sealing parts during manufacture or transportation.

Optionally, the first structural member also includes a third part for connecting the first part and the second part, and a side that is of the third part and oriented toward the cell is provided with an inclined surface, and the inclined surface is at an acute angle to the second direction. In a scenario where the first wall is assembled with the side walls in the third direction, the inclined surface is beneficial for the first part to be guided into a position between the third sealing part of the first cell and the third sealing part of the adjacent second cell.

Optionally, the first wall includes a plurality of side plates forming a receiving space, the first structural member is arranged in the receiving space, and the first part is connected with the side plates.

Optionally, the plurality of cells further include a third cell disposed adjacent to the second cell, the third sealing part of the third cell is disposed opposite to the third sealing part of the second cell, the battery pack also includes a second structural member disposed on the first wall, in the first direction, the second structural member is disposed between a sealing part joint of the second cell and a sealing part joint of the third cell, and the sealing part joint is a joint of the first sealing part and the third sealing part. The second structural member can separate the aluminum-plastic film of the cell case in the second cell and the third cell to improve electrochemical corrosion.

Optionally, in the first wall, the first structural member and the second structural member can be an integrally formed insulating plate, the first structural member and the second structural member are arranged at intervals in turn in the first direction, a through hole is provided between the adjacent first and second structural members, and the tab of the cell passes through the through hole and extends out of the first wall. The through hole may be beneficial to the rapid heat dissipation of the cell.

Optionally, the plurality of side walls include a first side wall and a second side wall opposite to each other in a second direction, and the first structural member is provided in at least one of the first side wall and the second side wall.

Optionally, the cell case includes an aluminum-plastic film.

Optionally, a through hole is disposed between the adjacent first and second structural members, and the tab passes through the through hole and extends to the outside of the housing.

Optionally, the second structural member includes a fourth part disposed between the sealing part joint of the second cell and a sealing part joint of the third cell in the first direction and a fifth part disposed between the first sealing part of the second cell and the first sealing part of the third cell.

Optionally, an orthographic projection of the sealing part joint is located in an orthographic projection of the fourth part in the first direction.

Optionally, the first structural member and the second structural member each include a convex portion including an inclined surface, and the inclined surface is at an acute angle to the third direction.

Optionally, a length of the convex portion does not exceed the length of the portion that is of the second part and disposed between the first sealing parts in the third direction, so as to guide the tab during an assembly process and facilitate passage of the tab through the through hole.

Optionally, the plurality of cells are divided into a plurality of columns, each column of cells including a plurality of groups, each group including a first cell and a second cell. The housing is provided with a separator, and two adjacent columns of cells are separated by the separator. The separator can be used to separate the aluminum-plastic films of two adjacent columns of cells and improve electrochemical corrosion.

Optionally, an orthographic projection of a portion that is of the first part and disposed between the adjacent third sealing parts is located in the orthographic projection of the first sealing part in the first direction.

Optionally, the first structural member is made of an insulating material, such as plastic.

Optionally, the second structural member is made of an insulating material, such as plastic.

In the second aspect, embodiments of the present application provide an electrical device including a load and a battery pack of any one of the above, the battery pack supplying power to the load.

In the battery pack and the electrical device of the present application, an insulating member is disposed between the side sealing parts of the adjacent cells, and the aluminum-plastic films of the adjacent cells are separated by the insulating member, so as to limit the electronic circulation loop between the aluminum-plastic film and the negative electrode, thereby improving electrochemical corrosion and improving the safety performance of the cells and the battery pack.

### BRIEF DESCRIPTION OF DRAWINGS

FIG. 1 and FIG. 2 are structural schematic diagrams of a battery pack according to an embodiment of the present application;
FIG. 3 is a schematic diagram of a cell module and a housing after assembly according to the embodiment of the present application;
FIG. 4 is a cross-sectional schematic diagram of a first structural member and a second structural member assembled with the cell module according to the embodiment of the present application;
FIG. 5 is another cross-sectional schematic diagram of the first structural member and the second structural member assembled with the cell module according to the embodiment of the present application;
FIG. 6 is a structural schematic diagram of a cell according to the embodiment of the present application;
FIG. 7 is a schematic diagram of positions of two adjacent cells in the present application;
FIG. 8 is a schematic diagram of positions of a plurality of cells in the cell module of the present application;
FIG. 9 is a structural schematic diagram of a first wall according to the embodiment of the present application;
FIG. 10 is an enlarged schematic view of a region shown by dashed lines in FIG. 9;
FIG. 11 is a structural schematic diagram of a protrusion shown in FIG. 9;
FIG. 12 is a partial structural schematic diagram of the battery pack according to another embodiment of the present application;
FIG. 13 is an enlarged schematic view of a region I indicated by dashed lines in FIG. 12;
FIG. 14 is an enlarged schematic view of a region II indicated by dashed lines in FIG. 12.

### DETAILED DESCRIPTION OF EMBODIMENTS

In order to make the object, technical solution and advantages of the present application clearer, the technical solution of the present application will be clearly described in conjunction with the embodiments and the accompanying drawings. It is obvious that the described embodiments are only a part of the embodiments, without covering all embodiments. Based on the embodiments in the present application, the following embodiments and their technical features may be combined with each other without conflict.

In particular scenarios, the battery pack includes but is not limited to all kinds of primary batteries, secondary batteries, fuel batteries, solar batteries and capacitor (e.g., super capacitor) batteries. The battery pack may preferably be a lithium secondary battery including but not limited to a lithium metal secondary battery, a lithium ion secondary battery, a lithium polymer secondary battery and a lithium ion polymer secondary battery. Any cell in the battery pack includes, but is not limited to, soft pack cells.

### First Embodiment

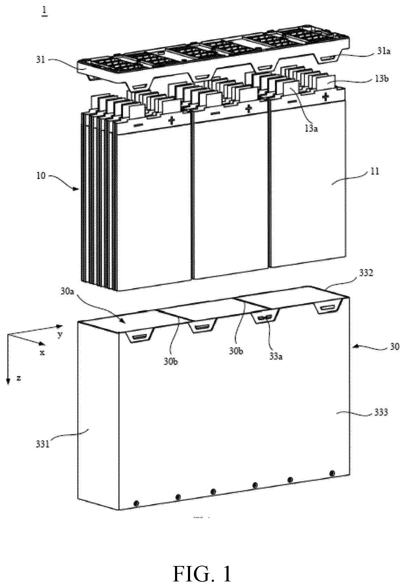

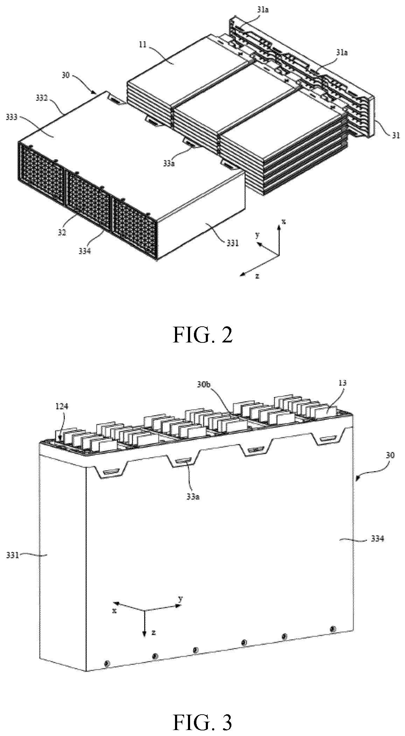

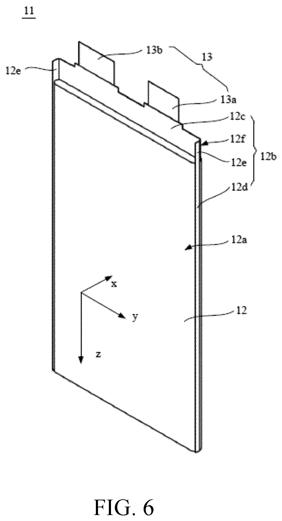

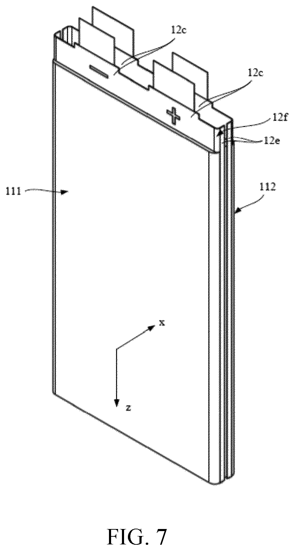

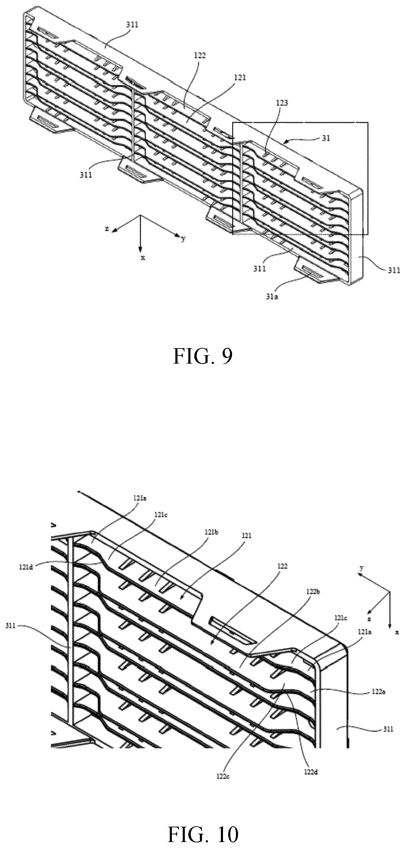

Referring to FIGS. 1 to 9, a battery pack 1 includes a cell module 10 and a first structural member 121. The cell module 10 includes a plurality of cells 11 stacked in the first direction x. The cell 11 includes an electrode assembly (not shown), a cell case 12, and a tab 13. The tab 13 is connected to the electrode assembly and is led out from the cell case 12. The first structural member 121 is made of an insulating material. Optionally, the first structural member 121 is made of an insulating material such as plastic. Optionally, an outer surface of the first structural member 121 is made of an insulating material.

The cell case 12 includes an accommodation portion 12a for accommodating an electrode assembly (not shown), and a sealing part 12b extending outward from a periphery of the accommodation portion 12a. The sealing part 12b includes a first sealing part 12c, a second sealing part 12d and a third sealing part 12e. The tab 13 extends out of the cell case 12 from the first sealing part 12c. The second sealing part 12d is arranged on opposite sides of the accommodation portion 12a in a second direction y. The third sealing part 12e extends from the second sealing part 12d and connects the first sealing part 12c and the second sealing part 12d. The second direction y is perpendicular to the first direction x.

Referring further to FIGS. 1 to 8, the plurality of cells 11 may be arranged in such a manner that two adjacent cells 11 are grouped together, and the two cells 11 include a first cell 111 and a second cell 112. The third sealing part 12e of the first cell 111 is provided on a side of the first sealing part 12c of the first cell 11 close to the second cell 112, and the third sealing part 12e of the second cell 112 is provided on a side of the first sealing part 12c of the second cell 112 close to the first cell 111. The third sealing part 12e of the first cell 111 is disposed oriented toward the third sealing part 12e of the second cell 112, and the third sealing part 12e of the second cell 112 is disposed oriented toward the third sealing part 12e of the first cell 111.

In each group, the first structural member 121 is disposed between the third sealing part 12e of the first cell 111 and the third sealing part 12e of the second cell 112 in the first direction x. The cell case 12 includes an aluminum-plastic film, and the first structural member 121 can be used to separate the aluminum-plastic films of the first cell 111 and the second cell 112, thereby limiting the electronic circulation loop between the aluminum-plastic film of one of the first cell 111 and the second cell 112 and the negative electrode of the other, improving electrochemical corrosion, and being beneficial to improving the safety performance of the cell 11 and the battery pack 1.

In the cell module 10, a plurality of cells 11 may be connected in series or in parallel, to form an effective power supply and/or charging unit of the battery pack 1. The number of cells 11 can be determined according to the power demand. Optionally, as shown in FIGS. 1 to 3, the tabs 13 of the plurality of cells 11 may be provided on the same side of the battery pack 1, where the tabs 12 of the first cell 111 and the second cell 112 are also provided on the same side of the battery pack 1.

The cell 11 may also include an electrolyte or the like provided in the accommodation portion 12a. In the case where the cell 11 includes positive and negative polarities, the electrode assembly includes a positive plate and a negative plate, and an insulating film disposed there between. The electrode assembly can be formed by winding or stacking a plurality of plates. One end of the tab 13 extends into the cell case 12 and is electrically connected with the plates of corresponding polarity. The other end of the tab 13 extends out from the cell case 12. The tab 13 includes a first tab 13a which is a negative tab and a second tab 13b which is a positive tab. The first tab 13a is electrically connected with the negative plate and extends from inside to outside of the cell case 12, and the second tab 13b is electrically connected with the positive plate and extends from inside to outside of the cell case 12. In other embodiments, the first tab 13a may be a positive tab and the second tab 13b may be a negative tab. The configuration of the tab 13 of the present application is described in some instances herein by taking one of them as an example.

The cell case 12 may be used to form a shape of the cell 11 and may also be used to define an external appearance of the cell 11. Internal elements such as the electrode assembly and electrolyte are accommodated in the accommodating portion 12a, and these internal elements are protected by the cell case 12, thereby improving the protection effect and safety of the cell 11.

The sealing part 12b can be used for sealing and restricting leakage of electrolyte from an end portion and entry of impurities such as water and oxygen outside the cell case 12 into the accommodating portion 12a. The first sealing part 12c may be used to seal a joint of the cell case 12 and the tab 13.

Referring to FIGS. 1 to 5, the battery pack 1 further includes a housing 30 housing a plurality of cells 11, and the cell module 10 is generally rectangular as a whole. Optionally, the housing 30 includes a first wall 31, a second wall 32 and four side walls, and the four side walls include a first side wall 331, a second side wall 332, a third side wall 333 and a fourth side wall 334. The first wall 31 is disposed adjacent to the tab 13 of the cell 11, and the first wall 31 and the second wall 32 are disposed opposite to each other in a third direction z. The four side walls are connected between the first wall 121 and the second wall 122, the first side wall 331 and the second side wall 332 are disposed opposite to each other in the second direction y, the third side wall 333 and the fourth side wall 334 are disposed opposite to each other in the first direction x, the second direction y is perpendicular to a plane where the first direction x and the third direction z lie, and the first direction x may be perpendicular to the third direction z.

In some scenarios, the second wall 32 and the four side walls may be an integrally formed structural member, and the first wall 31 is detachably connected to the side walls to receive and protect the cell module 10. For example, as shown in FIGS. 1 to 3, the third side wall 333 and the fourth side wall 334 are provided with protrusions 33a, the first wall 31 is provided with sockets 31a on both side edges in the first direction x, and the protrusions 33a are inserted into the corresponding sockets 31a, so that the first wall 331 can be mounted and fixed to the side walls to form a receiving cavity 30a. The number of the sockets 31a and the protrusions 33a may be plural, which facilitates enhancing the stability of the structural connection. It should be understood that the number of sockets 31a and protrusions 33a shown in FIGS. 1 to 3 are shown by example only.

A plurality of cells 11 may be disposed in the housing 30 in a predetermined manner, for example, the plurality of cells 11 are divided into a plurality of columns, each column of cells 11 including a plurality of groups, each group including a first cell 111 and a second cell 112. The housing 30 is provided with a separator 30b, and two adjacent columns of cells 11 are separated by the separator 30b. Optionally, the separator 30b includes an insulating member including an insulating material, and the separator 30b can be used to separate the aluminum-plastic films of two adjacent columns of cells 11 to improve electrochemical corrosion.

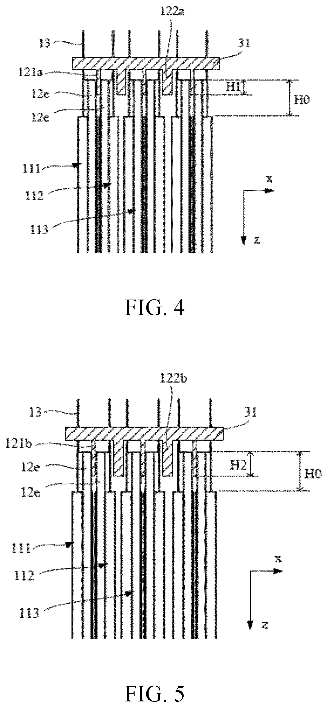

The first structural member 121 is provided on the first wall 31 and extends to a position between the third sealing part 12e of the first cell 111 and the third sealing part 12e of the adjacent second cell 112 in the third direction z. In some scenarios, for example, as shown in FIGS. 4, 5, 8 to 10, the first structural member 121 includes a first part 121a and a second part 121b. In the first direction x, the first part 121a is disposed between a third sealing part 12e of the first cell 111 and the third sealing part 12e of the adjacent second cell 112. The second part 121b is disposed between the first sealing part 12c of the first cell 111 and the first sealing part 12c of the adjacent second cell 112. Optionally, the first structural member 121 includes two first parts 121a with the second part 121b disposed there between. Optionally, the first part 121a and the second part 121b are insulating members of a plate-like structure, which facilitates the entry of the first structural member 121 into a position between the first cell 111 and the second cell 112 in a scenario where the first wall 31 is assembled with the side walls.

In some embodiments, in the first direction x, an orthographic projection of the third sealing part 12e is at least partially located in an orthographic projection of the first part 121a, which is beneficial for the first part 121a to isolate the third sealing part 12e of the first cell 111 from the third sealing part 12e of the adjacent second cell 112, thereby improving the isolation effect and improving electrochemical corrosion.

As shown in FIGS. 4 and 5, in the third direction z, a length of a portion that is of the first part 121a and disposed between the third sealing parts 12e is H1, and a length of a portion that is of the second part 121b and disposed between the first sealing parts 12c is H2, where H1 is less than H2.

In a scenario where the first wall 31 is assembled with the side walls in the third direction z, the second part 121b is first extended to a position between the first sealing part 12c of the first cell 111 and the first sealing part 12c of the adjacent second cell 112 to implement preliminary positioning, which is beneficial for the first part 121a to enter a position between the third sealing part 12e of the first cell 111 and the third sealing part 12e of the adjacent second cell 112. Optionally, in the first direction x, an orthographic projection of a portion that is of the first part 121a and disposed between the third sealing parts 12e is located in the orthographic projection of the first sealing part 12c.

In the third direction z, a length of the third sealing part 12e is H0 which may be a length of the third sealing part 12e protruding from an end face of the accommodating portion 12a. Optionally, H1 ≥ 5% ofH0. In the scenario where the first wall 31 is assembled with the side walls in the third direction z, the first part 121a extends from a free end of the third sealing part12e, and a length of the first part 121a extending between the third sealing parts 12e is greater than or equal to 5% of a height of the third sealing part 12e, which can reduce the contact between the adjacent third sealing parts 12e during manufacture or transportation.

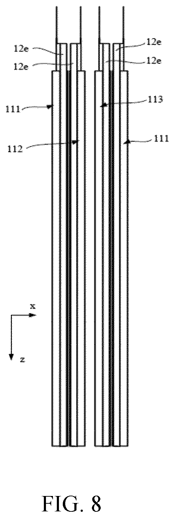

Referring to FIGS. 8, 9 and 10, in one embodiment, the first structural member 121 further includes a third part 121c disposed between the first part 121a and the second part 121b. An inclined surface 121d is provided on a side of the third part 121c oriented toward the cell 11, and the inclined surface 121d is at an acute angle to the second direction y. In a scenario where the first wall 31 is assembled with the side walls in the third direction z, the inclined surface 121d is beneficial for the first part 121a to be guided into a position between the third sealing part 12e of the first cell 111 and the third sealing part 12e of the adjacent second cell 112.

Referring further to FIGS. 1-5, the plurality of cells 11 further include a third cell 113 disposed adjacent to the second cell 112 for two groups adjacent in the first direction x. The third sealing part 12e of the third cell 113 is disposed opposite to the third sealing part 12e of the second cell 112, and it should be understood that the third cell 113 may also act as the first cell 111 or the second cell 112 in a single group.

The first wall 31 may also be provided with a second structural member 122 including an insulating material. In the first direction x, the second structural member 122 is disposed between the sealing part joint 12f of the second cell 112 and the sealing part joint 12f of the adjacent third cell 113. The sealing part joint 12f is a joint between the first sealing part 12c and the third sealing part 12e. The second structural member 122 can separate the aluminum-plastic films of the cell case 12 in the second cell 112 and the third cell 113, which is beneficial to improve the electrochemical corrosion. Optionally, the second structural member 122 is made of an insulating material such as plastic. Optionally, an outer surface of the second structural member 122 is made of an insulating material.

In some scenarios, as shown in FIGS. 4, 5, and 8-10, the second structural member 122 includes a fourth part 122a and a fifth part 122b, in the first direction x, the fourth part 122a is disposed between a sealing part joint 12f of the second cell 112 and a sealing part joint 12f of the adjacent third cell 113, and the fifth portion 122b is disposed between the first sealing part 12c of the second cell 112 and the first sealing part 12c of the adjacent third cell 113. Optionally, both the fourth part 122a and the fifth part 122b may be plate-shaped insulating structural members, facilitating the entry of the second structural member 122 into a position between the second cell 112 and the third cell 113 in the scenario of assembling the first wall 31 and the side walls.

In one embodiment, the orthographic projection of the sealing part joint 12f is at least partially located in the orthographic projection of the fourth part 122a, which is beneficial for the fourth part 122a to isolate the sealing part joint 12f of the second cell 112 from the sealing part joint 12f of the third cell 113, thereby improving the isolation effect and improving the electrochemical corrosion.

In the third direction z, a length of a portion that is of the fourth part 122a and disposed between the sealing parts 12f is H21, and a length of a portion that is of the fifth portion 122b and disposed between the first sealing parts 12c is H22, where H21 is less than H22. In the scenario where the first wall 31 is assembled with the side walls in the third direction z, the fifth portion 122b first extends between the first sealing part 12c of the second cell 112 and the first sealing part 12c of the adjacent third cell 113 to implement preliminary positioning, which is beneficial for the fourth part 122a to enter a position between the sealing part joint 12f of the second cell 112 and the sealing part joint 12f the adjacent third cell 113.

Referring to FIGS. 8, 9 and 10, in one embodiment, the second structural member 122 further includes a sixth portion 122c disposed between the fourth part 122a and the fifth portion 122b. An inclined surface 122d is provided on a side of the sixth portion 122c oriented toward the cell 11, and the inclined surface 122d is at an acute angle to the second direction y. In a scenario where the first wall 31 is assembled with the side walls in the third direction z, the inclined surface 122d is beneficial for the fourth part 122a to be guided into a position between the sealing part joint 12f of the second cell 112 and the sealing part joint 12f of the adjacent third cell 113.

In one embodiment, the first structural member 121 and the second structural member 122 are essentially the same.

Referring to FIGS. 1-10, the first wall 31 may include a plurality of side plates 311 forming a receiving space, for example, four side plates 311 are connected end to end to form a receiving space. The first structural member 121 and the second structural member 122 are arranged in the receiving space. Two first parts 121a of the first structural member 121 are respectively connected to the two side plates 311 disposed opposite to each other in the second direction y, which is beneficial for isolation of the third sealing part 12e of the first cell 111 from the third sealing part 12e of the adjacent second cell 112. Two fourth parts 122a of the second structural member 122 are respectively connected to the two side plates 311 disposed opposite to each other in the second direction y, which is beneficial for isolation of the sealing part joint 12f of the third cell 112 from the sealing part joint 12f of the adjacent third cell 113.

In the first wall 31, the first structural member 121, the second structural member 122 and other portions of the first wall 31 may be integrally molded insulating plates, such as by a low pressure injection molding process. In the first direction x, the first structural member 121 and the second structural member 122 are arranged at intervals in turn, and a through hole 124 is arranged between the adjacent first structural member 121 and second structural member 122, through which the tab 13 of the cell 11 passes and extends to the outside of the housing 30. The through hole 124 may facilitate rapid heat dissipation of the cell 11.

Referring further to FIGS. 8, 9, 10 and 11, the first and second structural members 121 and 122 may be provided with a plurality of convex portions 123, a side surface of the convex portion 123 oriented toward the sealing part 12b including an inclined surface 123a, and an angle α between the inclined surface 123a and the third direction z is an acute angle in the third direction z. In one embodiment, the convex portion 123 is provided in the second part 121, and in the third direction z, a length of the convex portion 123 does not exceed the length H2 of the portion that is of the second part 121b and disposed between the first sealing parts 12c, so as to guide the tab 13 during the assembly process and facilitate passage of the tab 13 through the through hole 124.

It should be understood that in other embodiments, one of the first structural member 121 and the second structural member 122 may be provided with the convex portion 123, and the other may not be provided with the convex portion 123.

Optionally, in the third direction z, a thickness of either of the first structural member 121 and the second structural member 122 may decrease, for example, a thickness of the second part 121b of the first structural member 121 decreases, and a thickness of the fifth portion 122b of the second structural member 122 decreases.

### Second Embodiment

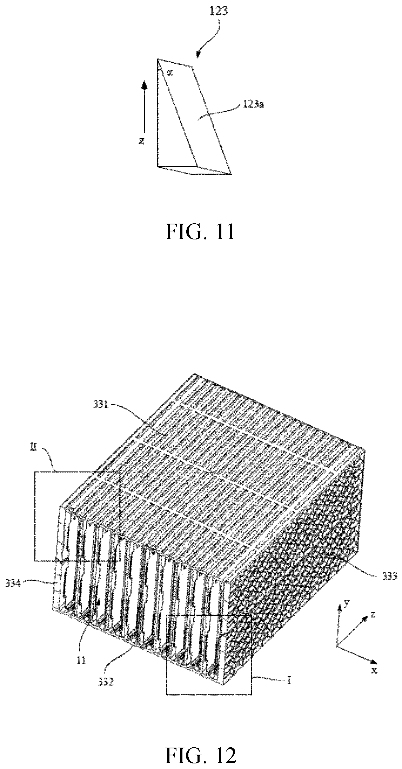

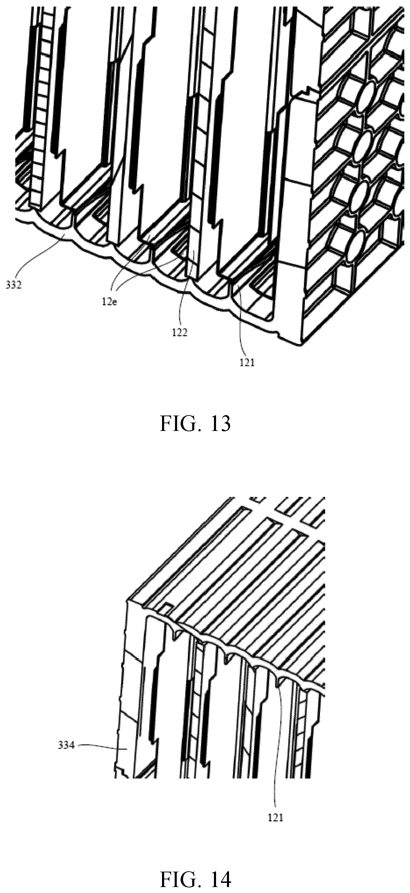

Structural elements of the same name are identified by the same reference signs in the embodiments of the present application. On the basis of, but mainly different from, the foregoing description of the embodiment, referring to FIGS. 12 to 14, the first side wall 331 and the second side wall 332 are respectively provided with the first structural member 121, and the first side wall 331 and the second side wall 332 are disposed opposite to each other in the second direction y. In the first direction x, the first structural member 121 is disposed between the third sealing part 12e of the first cell 111 and the third sealing part 12e of the adjacent second cell 112. Optionally, the first structural member 121, the first side wall 331 and the second side wall 332 are integrally molded by an injection molding process.

The first structural member 121 may include an insulating plate and extend in the second direction y between the third sealing part 12e of the first cell 111 and the third sealing part 12e of the adjacent second cell 112.

Optionally, in the third direction z, a width of the first structural member 121 is gradually reduced, which is beneficial for the first structural member 121 to be guided into a position between the third sealing part 12e of the first cell 111 and the third sealing part 12e of the adjacent second cell 112.

In this embodiment, in the third direction z, a length of the first structural member 121 extending to a position between the third sealing part 12e of the first cell 111 and the third sealing part 12e of the adjacent second cell 112 is H1. The height H1 of the first structural member 121 can still satisfy that H1≥5%*H0.

As shown in FIGS. 12 to 14, a plurality of cells 11 are arranged in the housing 30 in a column, and the plurality of cells 11 include a plurality of groups, each group include a first cell 111 and a second cell 112. The second structural member 122 may be an original side plate of the housing 30, and is disposed between two adjacent groups.

Another embodiment of the present application provides an electrical device, which includes a load and a battery pack 1 of any of the above embodiments, and the battery pack 1 supplies power to the load.

The electrical device can be implemented in various specific forms. For example, in practical application scenarios, the electrical device includes but is not limited to: standby power supply, unmanned aerial vehicle, single-wheeled, two-wheeled or more electric vehicles, motorcycles, bicycles, lighting appliances, toys, electric tools, industrial and commercial energy storage or household energy storage systems, etc.

Since the electrical device has the battery pack 1 of any of the foregoing embodiments, the electrical device can produce the beneficial effects that the battery pack 1 of the corresponding embodiment has.

In the absence of more restrictions, an element defined by the sentence "including a..." does not exclude the existence of other identical elements in the process, method, article or device including this element. In addition, components, features, and elements having the same name in different embodiments may have the same meaning or may have different meanings, and their specific meanings need to be determined by their interpretation in this specific embodiment or further in conjunction with the context in this specific embodiment.

In addition, in the description of embodiments of the present application, orientation or positional relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", etc. are based on the orientation or positional relationships shown in the drawings, for ease of description of the technical solutions of the corresponding embodiments of the present application and simplification of the description only, these terms do not indicate or imply that the device or element referred to must have a specific orientation or be constructed and operated in a specific orientation, and therefore cannot be construed as limitations to the present application.

Although the terms "first, second, third" and the like are used herein to describe various kinds of information, such information should not be limited to these terms. These terms are only used to distinguish the same type of information from each other. As used herein, the singular forms "a", "a" and "the" are intended to include the plural forms as well. The terms "or" and "and/or" are construed as inclusive or mean any one or any combination. Exceptions to this definition occur only when combinations of elements, functions, steps, or operations are inherently mutually exclusive in some way.

## Claims

1. A battery pack (1), comprising: a plurality of cells (11) stacked in a first direction (x) a first structural member (121) and a housing (30) for accommodating the plurality of cells (11); wherein each cell (11) comprises an electrode assembly, a cell case (12), and a tab (13);
the cell case (12) comprises an accommodation portion (12a) configured to accommodate the electrode assembly and a sealing part (12b) extending outward from a periphery of the accommodation portion (12a);
the tab (13) is connected to the electrode assembly and extends out from the cell case (12), the sealing parts (12b) comprise a first sealing part (12c), a second sealing part (12d) and a third sealing part (12e); the tab (13) extends out of the cell case (12) from the first sealing part (12c); and, in a second direction (y), the second sealing part (12d) is disposed on two opposite sides of the accommodation portion (12a), and the third sealing part (12e) extends from the second sealing part (12d) and connects the first sealing part (12c) and the second sealing part (12d);
the first structural member (121) comprises an insulating material, and, in the first direction (x), the first structural member (121) is disposed between the third sealing part (12e) of the first cell (111) and the third sealing part (12e) of the second cell (112).
the first structural member (121) comprises a first part (121a) disposed between the third sealing part (12e) of the first cell (111) and the third sealing part (12e) of the second cell (112); and a second part (121b) disposed between the first sealing part (12c) of the first cell (111) and the first sealing part (12c) of the second cell (112) in the first direction (x);
the housing (30) comprises a first wall (31), a second wall (32) and a plurality of side walls; the first wall (31) and the second wall (32) are disposed opposite to each other in a third direction (z), the first structural member (121) is disposed on the first wall (31), and the first structural member (121) extends between the third sealing part (12e) of the first cell (111) and the third sealing part (12e) of the second cell (112) in the second direction (y);
**characterized in that**, the plurality of cells (11) comprise a first cell (111) and a second cell (112) adjacent to each other, the third sealing part (12e) of the first cell (111) is disposed oriented towards the third sealing part (12e) of the second cell (112), and the third sealing part (12e) of the second cell (112) is disposed oriented towards the third sealing part (12e) of the first cell (111); and in the third direction (z), a length of a portion of the first part (121a) disposed between the third sealing part (12e) is H1, and a length of a portion of the second part (121b) disposed between the first sealing part (12c) is H2, where H1 is less than H2.

2. The battery pack (1) according to claim 1, **characterized in that**, an orthographic projection of the third sealing part (12e) is at least partially located in an orthographic projection of the first part (121a) in the first direction (x).

3. The battery pack (1) according to claim 1, **characterized in that**, a length of the third sealing part (12e) is H0, and H1 ≥ 5% of H0.

4. The battery pack (1) according to claim 1, **characterized in that**, the first structural member (121) further comprises a third part (121c) connecting the first part (121a) and the second part (121b), and a side of the third part (121c) oriented toward the cell (11) is provided with an inclined surface (121d), and the inclined surface (121d) is at an acute angle to the second direction (y).

5. The battery pack (1) according to claim 1, **characterized in that**, the first wall (31) comprises a plurality of side plates (311) forming a receiving space, the first structural member (121) is disposed in the receiving space, and the first part (121a) is connected with the side plates (311).

6. The battery pack according to any one of claims 1 to 4, **characterized in that**, the plurality of cells (11) further comprise a third cell (113) disposed adjacent to the second cell (112), and the third sealing part (12e) of the third cell (113) is disposed opposite to the third sealing part (12e) of the second cell (112); and
the battery pack (1) further comprises a second structural member (122) disposed on the first wall (31); in the first direction (x), the second structural member (122) is disposed between a sealing part joint (12f) of the second cell (112) and a sealing part joint (12f) of the third cell (113), and the sealing part joint (12f) is a joint of the first sealing part (12c) and the third sealing part (12e).

7. The battery pack (1) according to claim 1, **characterized in that**, the battery pack (1) further comprises a housing (30) for accommodating the plurality of cells (11), the housing (30) comprising a first side wall (331) and a second side wall (332) disposed opposite to each other in the second direction (y), the first structural member (121) is disposed in at least one of the first side wall (331) and the second side wall (332).

8. The battery pack (1) according to claim 1, **characterized in that**, the cell case (12) comprises an aluminum-plastic film.

9. The battery pack (1) according to claim 5, **characterized in that**, a through hole (124) is disposed between adjacent first and second structural members (122), and the tab (13) passes through the through hole (124) and extends to an outside of the housing (30).

10. The battery pack (1) according to claim 5, **characterized in that**, the second structural member (122) comprises a fourth part (122a) disposed between the sealing part joint (12f) of the second cell (112) and a sealing part joint (12f) of the third cell (113) in the first direction (x) and a fifth part (122b) disposed between the first sealing part (12c) of the second cell (112) and the first sealing part (12c) of the third cell (113).

11. The battery pack (1) according to claim 9, **characterized in that**, an orthographic projection of the sealing part joint (12f) is located in an orthographic projection of the fourth part (122a) in the first direction (x).

12. An electrical device comprising a load and a battery pack (1) according to any one of claims 1 to 11, wherein the battery pack (1) supplies power to the load.

## Patentansprüche

1. Batteriepack (1), umfassend: eine Vielzahl in einer ersten Richtung (x) gestapelten Zellen (11), ein erstes Strukturelement (121) und ein Gehäuse (30) zum Aufnehmen der Vielzahl von Zellen (11); wobei jede Zelle (11) eine Elektrodenbaugruppe, ein Zellgehäuse (12) und einen Steg (13) umfasst;
das Zellgehäuse (12) einen Aufnahmeabschnitt (12a), der so eingerichtet ist, dass er die Elektrodenbaugruppe aufnimmt, und ein Dichtungsteil (12b) umfasst, das sich von einem Umfang des Aufnahmeabschnitts (12a) nach außen erstreckt;
der Steg (13) mit der Elektrodenbaugruppe verbunden ist und sich aus dem Zellgehäuse (12) nach außen erstreckt, die Dichtungsteile (12b) ein erstes Dichtungsteil (12c), ein zweites Dichtungsteil (12d) und ein drittes Dichtungsteil (12e) umfassen; der Steg (13) sich von dem ersten Dichtungsteil (12c) aus dem Zellgehäuse (12) nach außen erstreckt; und in einer zweiten Richtung (y) das zweite Dichtungsteil (12d) auf zwei gegenüberliegenden Seiten des Aufnahmeabschnitts (12a) angeordnet ist, und das dritte Dichtungsteil (12e) sich von dem zweiten Dichtungsteil (12d) erstreckt und das erste Dichtungsteil (12c) und das zweite Dichtungsteil (12d) verbindet;
das erste Strukturelement (121) ein Isoliermaterial umfasst, und in der ersten Richtung (x) das erste Strukturelement (121) zwischen dem dritten Dichtungsteil (12e) der ersten Zelle (111) und dem dritten Dichtungsteil (12e) der zweiten Zelle (112) angeordnet ist.
das erste Strukturelement (121) ein erstes Teil (121a), das zwischen dem dritten Dichtungsteil (12e) der ersten Zelle (111) und dem dritten Dichtungsteil (12e) der zweiten Zelle (112) angeordnet ist, und ein zweites Teil (121b) umfasst, das zwischen dem ersten Dichtungsteil (12c) der ersten Zelle (111) und dem ersten Dichtungsteil (12c) der zweiten Zelle (112) in der ersten Richtung (x) angeordnet ist;
das Gehäuse (30) eine erste Wand (31), eine zweite Wand (32) und eine Vielzahl von Seitenwänden umfasst; die erste Wand (31) und die zweite Wand (32) einander in einer dritten Richtung (z) gegenüberliegend angeordnet sind, das erste Strukturelement (121) an der ersten Wand (31) angeordnet ist, und das erste Strukturelement (121) sich zwischen dem dritten Dichtungsteil (12e) der ersten Zelle (111) und dem dritten Dichtungsteil (12e) der zweiten Zelle (112) in der zweiten Richtung (y) erstreckt;
**dadurch gekennzeichnet, dass** die Vielzahl von Zellen (11) eine erste Zelle (111) und eine zweite Zelle (112) umfassen, die nebeneinander liegen, das dritte Dichtungsteil (12e) der ersten Zelle (111) in Richtung des dritten Dichtungsteils (12e) der zweiten Zelle (112) ausgerichtet angeordnet ist, und das dritte Dichtungsteil (12e) der zweiten Zelle (112) in Richtung des dritten Dichtungsteils (12e) der ersten Zelle (111) ausgerichtet angeordnet ist; und in der dritten Richtung (z) eine Länge eines Abschnitts des ersten Teils (121a), der zwischen dem dritten Dichtungsteil (12e) angeordnet ist, H1 ist, und eine Länge eines Abschnitts des zweiten Teils (121b), der zwischen dem ersten Dichtungsteil (12c) angeordnet ist, H2 ist, wobei H1 kleiner als H2 ist.

2. Batteriepack (1) nach Anspruch 1, **dadurch gekennzeichnet, dass** sich ein orthografischer Vorsprung des dritten Dichtungsteils (12e) mindestens teilweise in einem orthografischen Vorsprung des ersten Teils (121a) in der ersten Richtung (x) befindet.

3. Batteriepack (1) nach Anspruch 1, **dadurch gekennzeichnet, dass** eine Länge des dritten Dichtungsteils (12e) H0 ist und H1 ≥ 5 % von H0.

4. Batteriepack (1) nach Anspruch 1, **dadurch gekennzeichnet, dass** das erste Strukturelement (121) ferner ein drittes Teil (121c) umfasst, das das erste Teil (121a) und das zweite Teil (121b) verbindet, und eine in Richtung der Zelle (11) ausgerichtete Seite des dritten Teils (121c) mit einer geneigten Fläche (121d) versehen ist, und die geneigte Fläche (121d) in einem spitzen Winkel zur zweiten Richtung (y) steht.

5. Batteriepack (1) nach Anspruch 1, **dadurch gekennzeichnet, dass** die erste Wand (31) eine Vielzahl von Seitenplatten (311) umfasst, die einen Aufnahmeraum bilden, das erste Strukturelement (121) in dem Aufnahmeraum angeordnet ist, und das erste Teil (121a) mit den Seitenplatten (311) verbunden ist.

6. Batteriepack nach einem der Ansprüche 1 bis 4, **dadurch gekennzeichnet, dass** die Vielzahl von Zellen (11) ferner eine dritte Zelle (113) umfassen, die neben der zweiten Zelle (112) angeordnet ist, und das dritte Dichtungsteil (12e) der dritten Zelle (113) gegenüber dem dritten Dichtungsteil (12e) der zweiten Zelle (112) angeordnet ist; und das Batteriepack (1) ferner ein zweites Strukturelement (122) umfasst, das an der ersten Wand (31) angeordnet ist; in der ersten Richtung (x) das zweite Strukturelement (122) zwischen einer Dichtungsteilverbindung (12f) der zweiten Zelle (112) und einer Dichtungsteilverbindung (12f) der dritten Zelle (113) angeordnet ist, und die Dichtungsteilverbindung (12f) eine Verbindung des ersten Dichtungsteils (12c) und des dritten Dichtungsteils (12e) ist.

7. Batteriepack (1) nach Anspruch 1, **dadurch gekennzeichnet, dass** das Batteriepack (1) ferner ein Gehäuse (30) zum Aufnehmen der Vielzahl von Zellen (11) umfasst, das Gehäuse (30) eine erste Seitenwand (331) und eine zweite Seitenwand (332) umfasst, die einander in der zweiten Richtung (y) gegenüberliegend angeordnet sind, das erste Strukturelement (121) in mindestens einer von der ersten Seitenwand (331) und der zweiten Seitenwand (332) angeordnet ist.

8. Batteriepack (1) nach Anspruch 1, **dadurch gekennzeichnet, dass** das Zellgehäuse (12) eine Aluminium-Kunststofffolie umfasst.

9. Batteriepack (1) nach Anspruch 5, **dadurch gekennzeichnet, dass** zwischen benachbarten ersten und zweiten Strukturelementen (122) ein Durchgangsloch (124) angeordnet ist, und der Steg (13) durch das Durchgangsloch (124) hindurchgeht und sich zu einer Außenseite des Gehäuses (30) erstreckt.

10. Batteriepack (1) nach Anspruch 5, **dadurch gekennzeichnet, dass** das zweite Strukturelement (122) ein viertes Teil (122a), das zwischen der Dichtungsteilverbindung (12f) der zweiten Zelle (112) und einer Dichtungsteilverbindung (12f) der dritten Zelle (113) in der ersten Richtung (x) angeordnet ist, und ein fünftes Teil (122b) umfasst, das zwischen dem ersten Dichtungsteil (12c) der zweiten Zelle (112) und dem ersten Dichtungsteil (12c) der dritten Zelle (113) angeordnet ist.

11. Batteriepack (1) nach Anspruch 9, **dadurch gekennzeichnet, dass** sich ein orthografischer Vorsprung der Dichtungsteilverbindung (12f) in einem orthografischen Vorsprung des vierten Teils (122a) in der ersten Richtung (x) befindet.

12. Elektrische Vorrichtung, die eine Last und ein Batteriepack (1) nach einem der Ansprüche 1 bis 11 umfasst, wobei das Batteriepack (1) die Last mit Strom versorgt.

## Revendications

1. Bloc-batterie (1) comprenant : une pluralité de cellules (11) empilées dans une première direction (x) et un premier élément structurel (121) et un boîtier (30) destiné à loger la pluralité de cellules (11); chaque cellule (11) comprenant un ensemble d'électrodes, un boîtier (12) et une languette (13) ;
le boîtier (12) comprend une partie de logement (12a) configurée pour loger l'ensemble d'électrodes et une partie d'étanchéité (12b) s'étendant vers l'extérieur depuis une périphérie de la partie de logement (12a) ;
la languette (13) est reliée à l'ensemble d'électrodes et s'étend hors du boîtier (12) ; les parties d'étanchéité (12b) comprennent une première partie d'étanchéité (12c), une deuxième partie d'étanchéité (12d) et une troisième partie d'étanchéité (12e) ; la languette (13) s'étend hors du boîtier (12) depuis la première partie d'étanchéité (12c) ; et, dans une deuxième direction (y), la deuxième partie d'étanchéité (12d) est disposée sur deux côtés opposés de la partie de logement (12a), et la troisième partie d'étanchéité (12e) s'étend à partir de la deuxième partie d'étanchéité (12d) et relie la première partie d'étanchéité (12c) et la deuxième partie d'étanchéité (12d) ;
le premier élément structurel (121) comprend un matériau isolant, et, dans la première direction (x), le premier élément structurel (121) est disposé entre la troisième partie d'étanchéité (12e) de la première cellule (111) et la troisième partie d'étanchéité (12e) de la deuxième cellule (112) ;
le premier élément structurel (121) comprend une première partie (121a) disposée entre la troisième partie d'étanchéité (12e) de la première cellule (111) et la troisième partie d'étanchéité (12e) de la deuxième cellule (112) ; et une deuxième partie (121b) disposée entre la première partie d'étanchéité (12c) de la première cellule (111) et la première partie d'étanchéité (12c) de la deuxième cellule (112) dans la première direction (x) ;
le boîtier (30) comprend une première paroi (31), une deuxième paroi (32) et une pluralité de parois latérales ; la première paroi (31) et la deuxième paroi (32) sont disposées en vis-à-vis dans une troisième direction (z), le premier élément structurel (121) est disposé sur la première paroi (31), et le premier élément structurel (121) s'étend entre la troisième partie d'étanchéité (12e) de la première cellule (111) et la troisième partie d'étanchéité (12e) de la deuxième cellule (112) dans la deuxième direction (y) ;
**caractérisé en ce que** la pluralité de cellules (11) comprend une première cellule (111) et une seconde cellule (112) adjacentes l'une à l'autre, la troisième partie d'étanchéité (12e) de la première cellule (111) étant disposée orientée vers la troisième partie d'étanchéité (12e) de la seconde cellule (112), et la troisième partie d'étanchéité (12e) de la seconde cellule (112) étant disposée orientée vers la troisième partie d'étanchéité (12e) de la première cellule (111) ; et dans une troisième direction (z), une longueur d'une partie de la première partie (121a) disposée entre la troisième partie d'étanchéité (12e) est H1, et une longueur d'une partie de la deuxième partie (121b) disposée entre la première partie d'étanchéité (12c) est H2, où H1 est inférieur à H2.

2. Bloc-batterie (1) selon la revendication 1, **caractérisé en ce qu'**une projection orthographique de la troisième partie d'étanchéité (12e) est au moins partiellement située dans une projection orthographique de la première partie (121a) dans la première direction (x).

3. Bloc-batterie (1) selon la revendication 1, **caractérisé en ce que** la longueur de la troisième partie d'étanchéité (12e) est H0, et H1 ≥ 5 % de H0.

4. Bloc-batterie (1) selon la revendication 1, **caractérisé en ce que** le premier élément structurel (121) comprend en outre une troisième partie (121c) reliant la première partie (121a) et la deuxième partie (121b), et un côté de la troisième partie (121c) orienté vers la cellule (11) est pourvu d'une surface inclinée (121d), et la surface inclinée (121d) est à un angle aigu par rapport à la deuxième direction (y).

5. Bloc-batterie (1) selon la revendication 1, **caractérisé en ce que** la première paroi (31) comprend une pluralité de plaques latérales (311) formant un espace de réception, le premier élément structurel (121) est disposé dans l'espace de réception, et la première partie (121a) est reliée aux plaques latérales (311).

6. Bloc-batterie selon l'une quelconque des revendications 1 à 4, **caractérisé en ce que** la pluralité de cellules (11) comprend en outre une troisième cellule (113) disposée adjacente à la deuxième cellule (112), et la troisième partie d'étanchéité (12e) de la troisième cellule (113) est disposée à l'opposé de la troisième partie d'étanchéité (12e) de la deuxième cellule (112) ; et le bloc-batterie (1) comprend en outre un deuxième élément structurel (122) disposé sur la première paroi (31) ; dans la première direction (x), le deuxième élément structurel (122) est disposé entre un joint de partie d'étanchéité (12f) de la deuxième cellule (112) et un joint de partie d'étanchéité (12f) de la troisième cellule (113), et le joint de partie d'étanchéité (12f) est un joint de la première partie d'étanchéité (12c) et de la troisième partie d'étanchéité (12e).

7. Bloc-batterie (1) selon la revendication 1, **caractérisé en ce que** le bloc-batterie (1) comprend en outre un boîtier (30) pour loger la pluralité de cellules (11), le boîtier (30) comprenant une première paroi latérale (331) et une seconde paroi latérale (332) disposées en regard l'une de l'autre dans la seconde direction (y), le premier élément structurel (121) est disposé dans au moins l'une de la première paroi latérale (331) et de la seconde paroi latérale (332).

8. Bloc-batterie (1) selon la revendication 1, **caractérisé en ce que** le boîtier de cellule (12) comprend un film aluminium-plastique.

9. Bloc-batterie (1) selon la revendication 5, **caractérisé en ce qu'**un trou traversant (124) est disposé entre des premier et deuxième éléments structurels adjacents (122), et la languette (13) traverse le trou traversant (124) et s'étend jusqu'à l'extérieur du boîtier (30).

10. Bloc-batterie (1) selon la revendication 5, **caractérisé en ce que** le deuxième élément structurel (122) comprend une quatrième partie (122a) disposée entre le joint de partie d'étanchéité (12f) de la deuxième cellule (112) et un joint de partie d'étanchéité (12f) de la troisième cellule (113) dans la première direction (x) et une cinquième partie (122b) disposée entre la première partie d'étanchéité (12c) de la deuxième cellule (112) et la première partie d'étanchéité (12c) de la troisième cellule (113).

11. Bloc-batterie (1) selon la revendication 9, **caractérisé en ce qu'**une projection orthographique du joint de partie d'étanchéité (12f) est située dans une projection orthographique de la quatrième partie (122a) dans la première direction (x).

12. Dispositif électrique comprenant une charge et un bloc-batterie (1) selon l'une quelconque des revendications 1 à 11, dans lequel le bloc-batterie (1) alimente la charge.
